# EUROPÄISCHE PATENTSCHRIFT

(11) **EP 1 613 170 B1**
(45) Veröffentlichungstag und Bekanntmachung des Hinweises auf die Patenterteilung: **20.08.2008**
(21) Anmeldenummer: 04724969.3
(22) Anmeldetag: 01.04.2004
(51) Int. Cl.: A23G 7/02, A23G 1/18, F25D 13/04, F25D 13/06

(54) **VORRICHTUNG ZUM TEMPERIEREN VON GEGENSTÄNDEN**
DEVICE FOR TEMPERING OBJECTS
DISPOSITIF DESTINE A TEMPERER DES ARTICLES

(30) Priorität: 11.04.2003 DE 10317006
(43) Veröffentlichungstag der Anmeldung: 11.01.2006
(60) Teilanmeldung: 06017035.4
(73) Patentinhaber: AWEMA AG,, 8330 Pfäffikon (CH)
(72) Erfinder: KNOBEL, Josef, CH-8556 Wigoltingen (CH)
(74) Vertreter: Frommhold, Joachim
(86) Internationale Anmeldenummer: PCT/CH2004/000203
(87) Internationale Veröffentlichungsnummer: WO 2004/089101

(56) Entgegenhaltungen:
- EP-A- 0 333 565
- WO-A-99/04643
- DE-A- 2 544 923
- DE-A- 3 319 617
- DE-B- 1 083 284
- GB-A- 951 793
- GB-A- 1 283 073
- GB-A- 2 214 281
- US-A- 3 150 504
- US-A- 4 078 394

## Beschreibung

Die Erfindung betrifft eine Vorrichtung zum Temperieren von Gegenständen, insbesondere zum Kühlen von Verzehrgütem in der Confiserie, mit einem Hohlkörper mit Öffnungen in seinem Mantel, welcher von einer Führung für die Gegenstände umfangen ist, wobei dem Hohlkörper zumindest ein Ventilator und diesem zumindest ein Temperierelement zugeordnet ist.

### Stand der Technik

In vielen industriellen Bereichen werden Gegenstände hergestellt, die im Anschluss an die Erstellung gekühlt oder erwärmt werden müssen. Für viele Artikel, zum Beispiel In Fettmassenhülsen eingelegte Biskuits, ist trockene Luft mit einem Taupunkt von nicht höher als zum Beispiel 10°C erforderlich. Bei feuchter Luft werden die Biskuits zu weich.

Um eine effiziente Kühlung zu erreichen, wird der Unterschied der Temperatur der Kühlluft zur Ausformtemperatur des Kühlgutes möglichst gross gehalten. Das Kühlgut, zum Beispiel Fettmassen, kühlt aber wegen der schlechten Wärmeleitung und der grösseren Masse viel langsamer ab, als die entsprechende Giessform. Da sich in der Kühlluft in der Regel eine hohe Luftfeuchtigkeit befindet, kann es an der Form zu Kondenswasserbildung kommen, was wiederum zu Wasserflecken auf dem Produkt führt.

Aus der WO 99/04643 ist beispielsweise eine Vorrichtung der o.g. Art bekannt, bei der in den Hohlkörper bzw. In dessen Innenraum von unten her Luft eingeführt wird, die aus Luftöffnungen ausströmt und nachfolgend die Formen mit Kühlluft beaufschlagt. Durch diese Anordnung wird die Form, da sie auf einem Plattenbad liegt, nur von oben her gekühlt und die Kondenswasserbildung nicht berücksichtigt.

Aus der GB-951 793 ist eine Kühlvorrichtung bekannt, in welcher ein Luftstrom zur Entfenchtung unter den Gefrierepunkt abpekühlt, und anschließend wieder angewärmt wird.

### Aufgabe

Der vorliegenden Erfindung liegt die Aufgabe zugrunde, eine Vorrichtung der oben genannten Art zu entwickeln, mit der auf einfache Art und Weise ein möglichst rasches Temperieren der Gegenstände erreicht werden kann, wobei das Temperieren möglichst von allen Seiten erfolgen soll und die Kondenswasserbildung verhindert wird.

### Zur Lösung der Aufgabe

Zur Lösung dieser Aufgabe führt, dass das Temperierelement zumindest zwei Kühlzonen mit unterschiedlicher Temperatur aufweist.

Zwei Kühlzonen haben den Vorteil, dass sie mit unterschiedlichen Temperaturen betrieben werden können. Das heisst, die erste Kühlzone kann sehr tief gefahren werden (z.B. 0-2°C), so dass in ihr die meiste Kondensierung von Luftfeuchtigkeit aus der vorzugsweise im Kreislauf geführten Kühlluft erfolgt. Durch sie kann beispielsweise mittels eines Ventilators ein geringerer Teil der Kühlluft gedrückt werden, so dass nur wenig von dem Kondenswasser in die Gesamtkühlluft gelangt. Das Kondensieren wird somit beispielsweise konzentriert, so dass das Kondenswasser konzentrierter abgeführt werden kann. Die zweite Kühlzone kann weniger tief gefahren werden (z.B. 5-8°C) und trägt somit zusammen mit der ersten Kühlzone zur Einstellung bzw. Regelung der aus diesen beiden Temperierzonen durch Vermischung resultierenden Kühllufttemperatur bei.

### Figurenbeschreibung

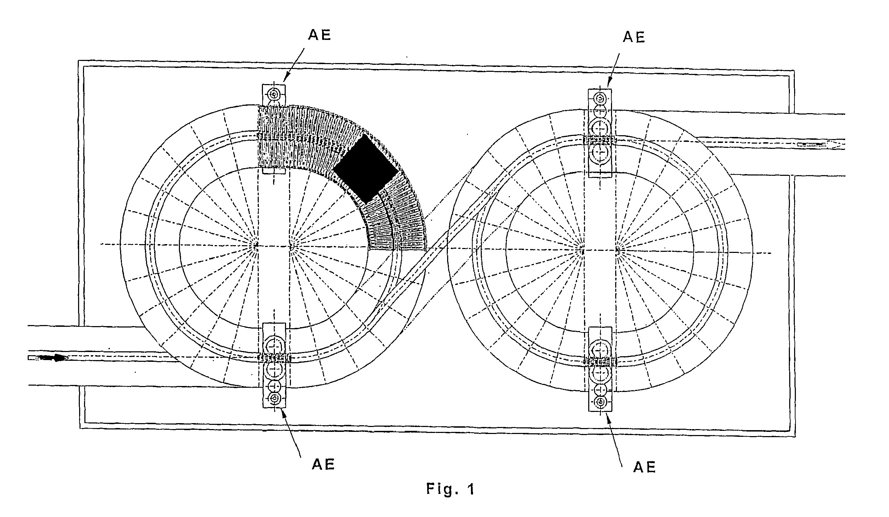

Weitere Vorteile, Merkmale und Einzelheiten der Erfindung ergeben sich aus der nachfolgenden Beschreibung bevorzugter Ausführungsbelspiele sowie anhand der Zeichnung; diese zeigt in
- Fig. 1: eine teilweise schematisch dargestellte Draufsicht auf eine erfindungsgemässe Vorrichtung zum Temperieren von Gegenständen;
- Fig. 2: einen schematisch dargestellten Längsschnitt durch die Vorrichtung gemäss Fig. 1 entlang Linie II-II;
- Fig. 3: eine Draufsicht auf einen Teil einer erfindungsgemässen Führung;
- Fig. 4A: einen Querschnitt durch die Führung im Bereich eines Antriebs mit aufgelegter Form;
- Fig. 4B: eine Draufsicht auf den Antrieb ohne aufgelegte Form;
- Fig. 5: eine Seitenansicht der erfindungsgemässen Führung im Bereich einer Umlenkung; und
- Fig. 6: eine Seitenansicht eines Teils der Führung im Bereich einer im Gegensatz zu Fig. 5 entgegengesetzten Umlenkung.

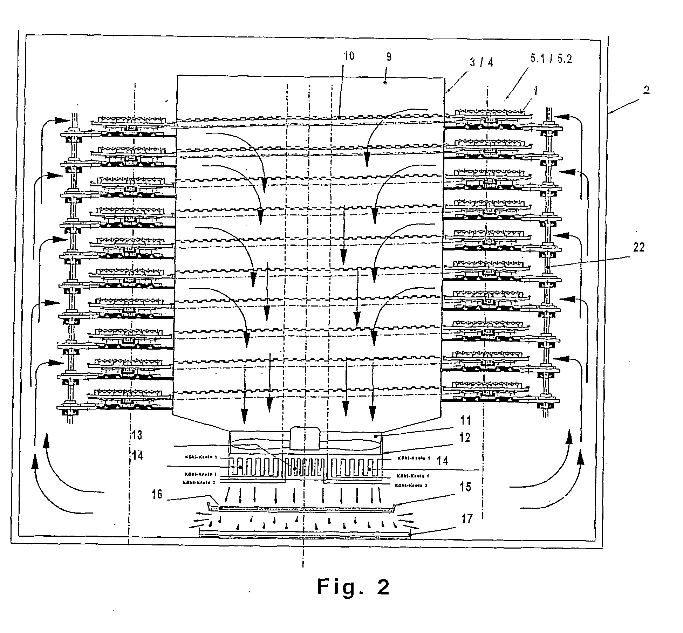

Eine erfindungsgemässe Vorrichtung zum Temperieren von Gegenständen, die sich in einer Form 1, Palette oder dgl. befinden, weist in einem Maschinengehäuse 2 zwei Hohlkörper 3 und 4 auf. Jeder Hohlkörper 3 und 4 wird von einer Führung 5 zum Führen der Formen 1 umfangen, wobei die Formen 1 über einen Einlauf 6 in die Führung 5.1 das ersten Höhlkörpers 3 gelangen. Die Führungen 5.1 und 5.2 umkreisen ihre jeweiligen Hohlkörper 3 und 4 wendelförmig, wie dies in Fig. 2 erkennbar ist.

Von der Führung 5.1 führt eine strichpunktiert angedeutete Geradstrecke 7 im oberen Bereich des Hohlkörpers 3 zur Führung 5.2 des Hohlkörpers 4, wobei die Führung 5.2 eine nach unten gerichtete Wendel aufweist. Die Führung 5.2 mündet dann in einen Auslauf 8 aus.

Der Hohlkörper 3/4 kann gemäss Fig. 2 nach oben hin von einem Deckel verschlossen oder aber auch offen sein. In seinen Mantel 9 sind eine Vielzahl von Öffnungen 10 eingeformt, die ebenfalls wendelförmig nach oben oder nach unten ausgerichtet sind. Bevorzugt folgen die Öffnungen 10 den Formen 1, die sich auf der Führung 5.1/5.2 befindet.

Im unteren Bereich sitzt in dem Hohlkörper 3/4 ein Ventilator 11, welcher Luft aus dem Innenraum des Hohlkörpers 3/4 ansaugt. Diesem Ventilator 11 ist ein Temperierelement 12 nachgeschaltet, wobei das Temperierelement 12 als Wärmetauscher ausgebildet ist und eine innere Temperierzone 13 sowie eine äussere Temperierzone 14 aufweist, die jeweils von einem Teil des Kühlkreislaufs durchströmt werden.

Unter dem Temperierelement 12 befindet sich ein Flüssigkeitsfänger 15, in dem eine Prallmatte 16 vorgesehen ist.

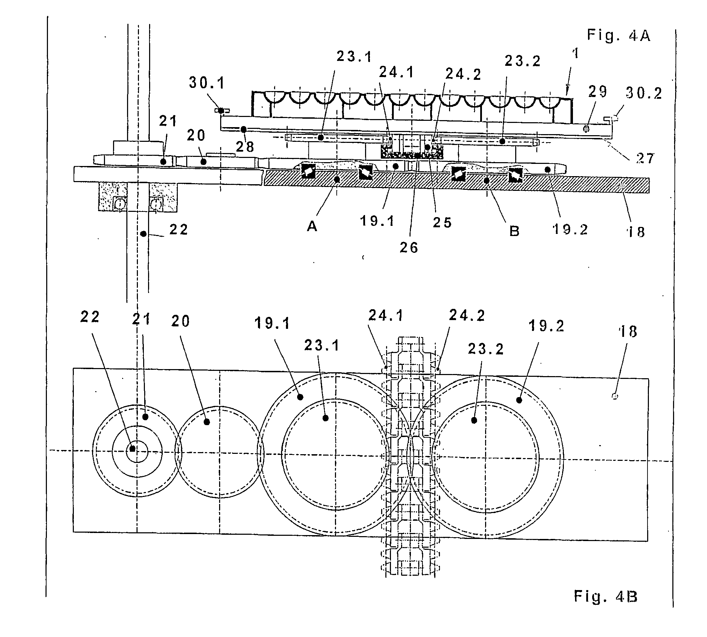

Unterhalb des Flüssigkeitsfängers 15 ist eine Auffangwanne 17 für Flüssigkeit angeordnet. Die Führung 5.1/5.2 weist gemäss Fig. 4 eine Wendelbahn 18 auf, welche die Hohlkörper 3 und 4 umläuft. Auf der Wendelbahn 18 sind zwei Treibräder 19.1 und 19.2 über Lager 20 abgestützt, wobei die Treibräder 19.1 und 19.2 miteinander in Eingriff stehen.

Das Treibrad 19.1 ist über ein Zwischenrad 20 mit einem Antriebsrad 21 verbunden. Das Antriebsrad 21 sitzt auf einer Antriebswelle 22 auf, wobei wie in Fig. 2 erkennbar die Antriebswelle 22 eine Mehrzahl von Antriebsräder 21 in den unterschiedlichen Stockwerken der Führung 5.1 bzw. 5.2 antreibt.

Wie in Fig. 4A und Fig. 4B gezeigt, weisen die Treibräder 19.1 und 19.2 jeweils eine Achse A bzw. B auf, um welche sie sich drehen. Auf jeder Achse A bzw. B sitzt auch ein Zahnrad 23.1 bzw. 23.2 auf, welche mit einer Zahnung 24.1 und 24.2 an einem Gleitstück 25 zusammenwirken. Die Zahnungen 24.1 und 24.2 sind auf ihre Zahnräder 23.1 und 23.2 in einer Krümmung so abgestimmt, dass ein evolventenartlger Eingriff zwischen Zahnung 24.1 bzw. 24.2 und Zahnrad 23.1 und 23.2 erfolgt.

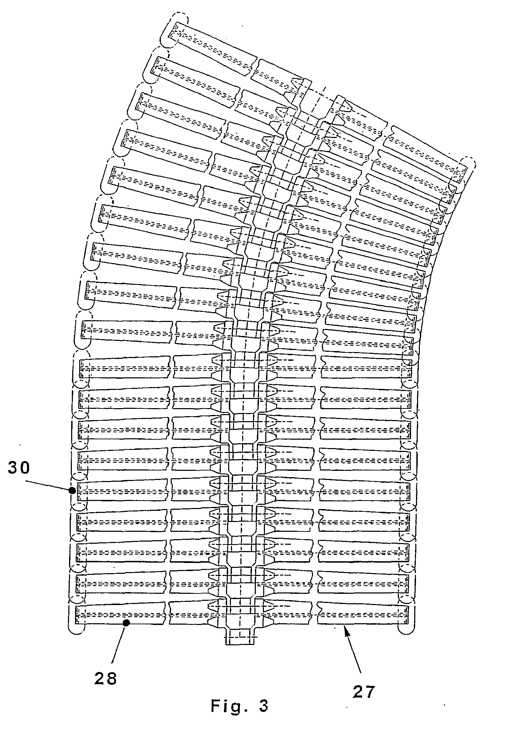

Das Gleitstück 25 gleitet In einer Schiene 26, welche oberhalb der Wendelbahn 18 angeordnet ist, dieser jedoch folgt. Dabei ist das Gleitstück 25 Teil einer Trägerschwinge 27, die in Fig. 3 besser erkennbar ist. Eine Vielzahl von Trägerschwingen 27 sind gelenkig miteinander verbunden und bilden so eine Transportbahn für die Form 1. Dabei sitzt jedoch die Form nicht direkt auf einer Schwingenfläche 28 auf, sondern auf einer Querrippe 29, die von der Schwingenfläche 28 aufragt.

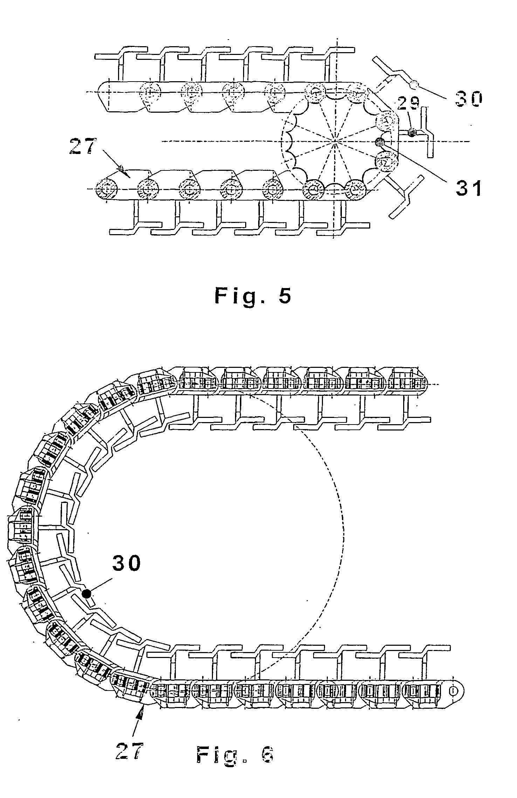

Auf der Querrippe 29 sitzen seitlich jeweils Seitenbegrenzer 30.1 bzw. 30.2 auf, welche wie In Fig. 5 erkennbar, die Form eines flachen liegenden Z aufweisen. Hierdurch wird gewährleistet, dass die Seitenbegrenzer 30 bei linearer Führung sich überlappen und somit eine geschlossene seitliche Begrenzung für die Form 1 bilden. Bei einer Umlenkung um eine Umlenkrolle 31 gemäss Fig. 5 können die Seitenbegrenzer 30 auseinander klaffen, überlappen sich aber dann wieder bei Geradeführung.

Bei einer anderen Umlenkung gemäss Fig. 6 ist zwischen den Seitenbegrenzern 30 noch genügend Freiraum, so dass sie auch näher zusammengebracht werden können.

### Die Funktionsweise der vorliegenden Erfindung ist folgende:

Der Ventilator 11 saugt die Luft, wie durch die Pfeile angedeutet, aus dem Innenraum des Hohlkörpers 314 und presst die Luft durch das Temperierelement 12. Insbesondere, wenn der Hohlkörper 3/4 nach oben hin geschlossen ist, entseht im Hohlkörper ein Unterdruck und im gesamten Maschinengehäuse 2 ein entsprechender Überdruck. In Folge des Unterdrucks in dem Hohlkörper 3/4 wird Luft durch die Öffnungen 10 angesaugt, so dass eine erhebliche, später noch zu beschreibende Luftzirkulation in den einzelnen Etagen der Führung 5.1/5.2 entsteht.

Das Temperierelement besitzt, wie oben erwähnt, die innere Temperierzone 13 und die äussere Temperierzone 14. Die innere Temperierzone 13 wird mit einem Kühlmittel beschickt, welches eine möglichst tiefe Temperatur, aber nicht unter 0°C aufweist. Die Kühltemperatur der äusseren Temperierzone 14 ist höher. Dies bedeutet, dass der Wasseranteil der Kühlluft insbesondere an der inneren Temperierzone 13 kondensiert. Der für die Kühlluft verantwortliche Teil der Temperierzone arbeitet auf einem höheren Niveau. Durch die Vermischung der jeweils durch die Temperierzone 13 und durch die Temperierzone 14 strömenden Kühlluft wird ein Taupunkt unter den üblichen Wert abgesenkt.

Beim Anfahren des Temperierelementes bildet sich noch Kondenswasser an beiden Kühlkreisen. Nach einer bestimmten Zeit bildet sich jedoch nur noch Kondenswasser am inneren Kreislauf, wobei nun der Ventilator 11 seine zweite Funktion bestens erfüllen kann. Das Kondenswasser wird nämlich in Form kleiner Wassertropfen vom Ventilator mit grosser Geschwindigkeit nach unten geblasen.

Wäre nun unterhalb des Temperierelementes 12 lediglich eine Auffangwanne vorhanden, so würde zwar ein Teil des Kondenswassers In dieser Auffangwanne verbleiben, jedoch in Folge der starken Luftströmung wieder in den Umlauf gebracht. Das bedeutet, dass ein möglicher tiefer Taupunkt nicht erreicht werden kann.

Deshalb ist erfindungsgemäss zwischen der Auffangwanne 17 und dem Temperierelement 12 der Flüssigkeitsfänger 15 mit seiner Prallmatte 16 angeordnet. Diese Prallmatte sammelt die kleinen Tröpfchen des Kondenswassers, wobei die Tröpfchen durch die Prallmatte hindurch sickern. Der grösste Teil der Luft, die aus dem Temperierelement 12 austritt, fliesst seitlich an dem Flüssigkeitsfänger 15 vorbei und nimmt dabei keine Flüssigkeit mehr mit, da diese in der Prallmatte versickert. Nur ein geringerer Teil der Luft durchdringt die Prallmatte, wird hier aber erheblich abgebremst, so dass dieser Luftstrom nicht mehr die Kraft hat, die sich in der Prallmatte sammelnden, schweren Tröpfchen aufzunehmen und mitzuführen. Diese schweren Tropfen tropfen nach unten in die Auffangwanne 17 ab. Das heisst, mit dem erfindungsgemässen Konzept wird erreicht, dass die Kühlluft auf den gewünschten Taupunkt abtrocknet.

Die abgetrocknete Luft wird nun seitlich wieder an den Wänden des Maschinengehäuses 2 entlang der Führung 5.1/5.2 nach oben geführt und tritt dort in die einzelnen Etagen der Führungen 5.1/5.2 ein. Da die Formen jedoch von den Schwingenflächen 28 abgehoben sind und auf den Querrippen 29 aufsitzen, kann die Kühlluft den Boden der Formen beaufschlagen. Dieser Boden weist normalerweise eine Vielzahl von Hohlräumen auf, in denen es zu einer erheblichen Verwirbelung der Kühlluft kommt, da sich die Kühlluft zudem vor den Öffnungen 10 des Mantels 9 staut. Diese Verwirbelungen sind durch die entsprechenden Pfeile in Fig. 4A angedeutet. Das heisst, durch diese Anordnung strömt Kühlluft die Form von oben, von unten und von beiden Seiten an, was zu einer perfekten Wärmeabgabe führt. Die Kühlung der Gegenstände wird zudem vergleichmässigt. Dies hat sehr positive Wirkung auf die Qualität der Gegenstände.

### Bezugezeichenliste

- 1: Form
- 2: Maschinengehäuse
- 3: Hohlkörper
- 4: Hohlkörper
- 5: Führung
- 6: Einlauf
- 7: Geradstrecke
- 8: Auslauf
- 9: Mantel
- 10: Öffnungen
- 11: Ventilator
- 12: Temperierelement
- 13: innere Temperierzone
- 14: äussere Temperierzone
- 15: Flüssigkeitsfänger
- 16: Prallmatte
- 17: Auffangwanne
- 18: Wendelbahn
- 19: Trelbrad
- 20: Zwischenrad
- 21: Antriebsrad
- 22: Antriebswelle
- 23: Zahnrad
- 24: Zahnung
- 25: Gleitstück
- 26: Schiene
- 27: Trägerschwinge
- 28: Schwingenfläche
- 29: Querrippe
- 30: Seitenbegrenzer
- 31: Umlenkrolle

- A: Achse von 19.1
- B: Achse von 19.2

## Patentansprüche

1. Vorrichtung zum Temperieren von Gegenständen, insbesondere zum Kühlen von Verzehrgütem in der Confiserie, mit einem Hohlkörper (3, 4) mit Öffnungen (10) in seinem Mantel (9), welcher von einer Führung (5.1, 5.2) für die Gegenstände umfangen ist, wobei dem Hohlkörper (3, 4) zumindest ein Ventilator (11) und diesem zumindest ein Temperierelement (12) zugeordnet ist, **dadurch gekennzeichnet, dass** das Temperierelement (12) zumindest zwei Kühlzonen (13, 14) mit unterschiedlicher Temperatur aufweist.

2. Vorrichtung nach Anspruch 1, **dadurch gekennzeichnet, dass** eine Kühlzone (13) eine möglichst tiefe Temperatur nahe 0-2°C aufweist, während die Temperatur der anderen Kühlzone (14) bei ca. 5-8°C liegt

3. Vorrichtung nach Anspruch 1 oder 2, **dadurch gekennzeichnet, dass** die erste Kühlzone (13) eine im wesentlichen konstante Grundtemperatur liefert.

4. Vorrichtung nach Anspruch 1, 2 oder 3, **dadurch gekennzeichnet, dass** die zweite Kühlzone (14) mit einer zum Regeln bzw. zum Einstellen einer durch die beiden Kühlzonen (13, 14) erzeugten Mischungstemperatur mit veränderlicher Temperatur gefahren wird.

## Claims

1. A device for tempering objects, in particular for cooling consumables in the area of confectionary, having a hollow item (3, 4) with openings (10) in its jacket (9), which is enveloped by a guide (5.1, 5.2) for the objects, wherein the hollow item (3, 4) at least one fan (11) allocated to it, and the latter has at least one tempering element (12) allocated to it, **characterized in that** the tempering element (12) exhibits at least two cooling zones (13, 14) with varying temperature.

2. The device according to claim 1, **characterized in that** a cooling zone (13) exhibits a lowest possible temperature near 0-2°C, while the temperature in the other cooling zone (14) measures approx. 5-8°C.

3. The device according to claim 1 or 2, **characterized in that** the first cooling zone (13) delivers an essentially constant base temperature.

4. The device according to claim 1, 2 or 3, **characterized in that** the second cooling zone (14) with a mixing temperature generated in order to control or set one of the two cooling zones (13, 14) is operated at a variable temperature.

## Revendications

1. Dispositif permettant de tempérer des objets, notamment de refroidir des produits de consommation de la confiserie, comportant un corps creux (3, 4) pourvu d'ouvertures (10) dans son enveloppe (9) et qui est entouré d'un guide (5.1, 5.2) pour les objets, étant associé au corps creux (3, 4) au moins un ventilateur (11) et à ce dernier au moins un élément températeur (12), **caractérisé en ce que** l'élément températeur (12) comporte au moins deux zones de refroidissement (13, 14) à température différente.

2. Dispositif selon la revendication 1, **caractérisé en ce qu'**une zone de refroidissement (13) présente une température aussi basse que possible de 0 à 2° C tandis que la température de l'autre zone de refroidissement (14) est d'environ 5 à 8° C.

3. Dispositif selon la revendication 1 ou 2, **caractérisé en ce que** la première zone de refroidissement (13) donne une température de base sensiblement constante.

4. Dispositif selon la revendication 1, 2 ou 3, **caractérisé en ce que** la deuxième zone de refroidissement (14) est parcourue à une température permettant de réguler ou régler une température mixte générée par les deux zones de refroidissement (13, 14) à une température variable.
